# EUROPEAN PATENT APPLICATION

(11) **EP 1 027 832 A1**
(43) Date of publication of application: **16.08.2000**
(21) Application number: 00200438.0
(22) Date of filing: 10.02.2000
(51) Int. Cl.: A23G 9/04, A23G 9/12, A23G 9/22

(54) **Process for the whipping of blended foodstuffs**

(30) Priority: 11.02.1999 IT MI990261
(71) Applicant: BRAVO S.p.A., I-36100 Vicenza (IT)
(72) Inventor: Bravo, Genesio, 36041 Alte Di Montecchio Maggiore (IT)
(74) Representative: Martegani, Franco

(57) **Abstract**

The invention refers to a process for the whipping of blended foodstuffs, where a fluid blend is introduced into a whipping vessel equipped with cooling and mixing devices to process it into a pasty or creamy finished product. According to this invention, in the transitional phase from said fluid to a pasty state the blend is processed through a sequence of phases in which the mentioned blender rotates at different speeds. This achieves a product of superior quality.

## Description

This invention refers to an enhanced process for the whipping of blended foodstuffs, in particular for the production of a so-called "handicrafted" ice cream. As the experts in the trade know very well, the "handicrafted" ice cream is mostly produced by two systems.

A first system comprises the following three phases:
1) Pasteurizing the basic blend by heating it up to +85°C and quick-cooling it down to a temperature of about +4°C, so as to eliminate the bacterial flora;
2) A curing process of the pasteurized blend at 4°C for an adequate period of time, for instance 12 hours;
3) Whipping of the cured blend while cooling it, until producing an ice cream of a structural consistency suitable for extracting it from the whipping unit, at temperatures, depending on the occasion, generally ranging from -8°C to -11°C.

In the trade, this system is commonly known as a "classic" or "traditional" method.

A second system known in the trade as a "triptyc" method, does not consider the process of curing of the blend: in other words, the blend heated up to +85%, is immediately cooled and contemporaneously whipped. Such a process can for example be carried out by using the machines described in the patents IT-996.102, IT-1.055.984, and EP-A-423.898, whose teachings may be considered as being part of this application.

In both systems briefly mentioned above, the whipping of the blend was carried out inside a cooled whipping cylinder, whose blender was rotated at constant speed throughout the entire whipping phase.

The blender was eventually accelerated merely to allow a quicker and easier extraction of the already whipped icecream from the cylinder, ready for consumption and/or storage.

The use of the above production systems allowed obtaining a "handicrafted" ice cream of excellent quality, exhibiting the desired organoleptic as well as structural properties.

It was however surprisingly discovered that while processing the blend in a whipping stage by rotating the whipping unit at various speeds (no longer at a constant single speed as in the known art), an ice cream of further improved overall properties from both an organoleptic and structural viewpoint was obtained while simultaneously reducing the whipping time during the various whipping stages, with all the ensuing advantages even from an energy viewpoint, which is assuming an ever greater importance in every trade.

The new and original feature of the invention lies therefore in obtaining a blended foodstuff by rotating the whipping blender at various speeds during the various whipping phases.

More precisely, the invention is based on a procedure for the whipping of blended foodstuffs - in particular for the production of "handicrafted" ice creams - where a blend in a liquid state is introduced into a whipping unit equipped with cooling devices for the blend, and a blender is capable of taking it to a pasty and/or creamy finished product condition, characterized in that the said blend is processed, in a transitional period from the said fluid to a pasty state, according to a sequence of phases in which the said blender rotates at different speeds.

The process of the invention is defined in the principal claim, and in its subordinate claims attached.

The process of the invention may be carried out by utilizing a whipping machine equipped with multiple rotating speed devices, apprpriately set up to achieve the purpose.

In a preferential yet not essential way, the process of the invention may be carried out to advantage while using a blender drived by an alternate current motor, by a frequency "inverter" whose purpose is to change the blender's rotating speed, whenever desired and in an appropriately programmed manner.

For example, in order to execute the process of the invention, the entire whipping cycle may be carried out by controlling the current absorbed by the blender motor and regulating the rotating speed of the blender based on the same.

The regulating of the blender speed can, as mentioned above, be carried out by a motor feeding device commonly known as an "inverter".

Such a device varies the frequency of the sinusoidal feeding wave, and therefore of the whipping blender.

Utilizing for instance the "triptych" method, according to one possible embodiment of the process of this invention, the blend is poured into the whipping cylinder at a temperature of 85°C, and the initial blender speed is set for instance at 90 Hz (350 rpm). This first whipping phase, where the blender rotates at a speed of for example 350 rpm (90 Hz), may for example last for five minutes,

During this first blending phase, the absorption of current on the part of the motor is small because the blend, while cooling off at a very quick rate, is always in a liquid condition.

After 5 minutes of whipping, in a second phase the blender's rotating speed is for example lowered to 55 Hz (210 rpm), and remains at his value until the current absorption of the motor falls below a certain limit (LIM1).

When the current absorption of the motor exceeds other limits (LIM2 and LIM3) because the structure of the blend turns ever more consistent, the blender's rotating speed is further reduced to 40 Hz (164 rpm) and 32 Hz (140 rpm).

At this point the whipping of the blend is complete and yields a pasty and/or creamy product of the desired consistency, which can be extracted from the whipping cylinder, eventually even while accelerating the blender's rotating speed.

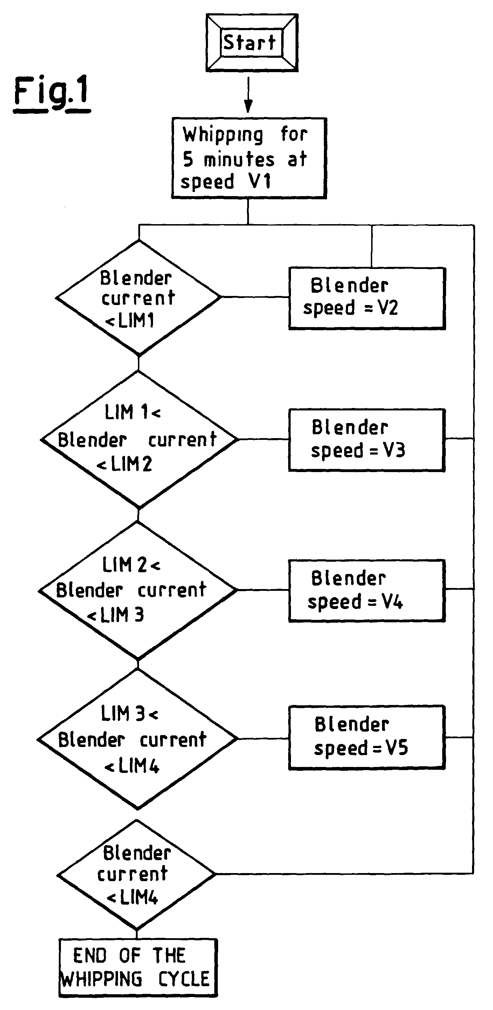

The block diagram of Figure 1 outlines the phases of the described process in a simplified form.

The adoption of a whipping cycle as described above achieves, in addition to optimizing the performance of the machine used (for example, of a machine known in the market under the Triptych (TRITTICO) registered trademark, a finished product of superior quality.

The higher speed in the initial phase, when the blend is still in a liquid condition, in fact favors the homogenization and blending of the components of the same, as well as the inclusion or incorporation of air in the blend itself.

The subsequently reduced speeds, above all that in the final processing stage, improve the thermodynamic characteristics of the machine used, while favoring the exchange of heat with the walls of the whipping cylinder.

This allows attaining lower temperatures in less time.

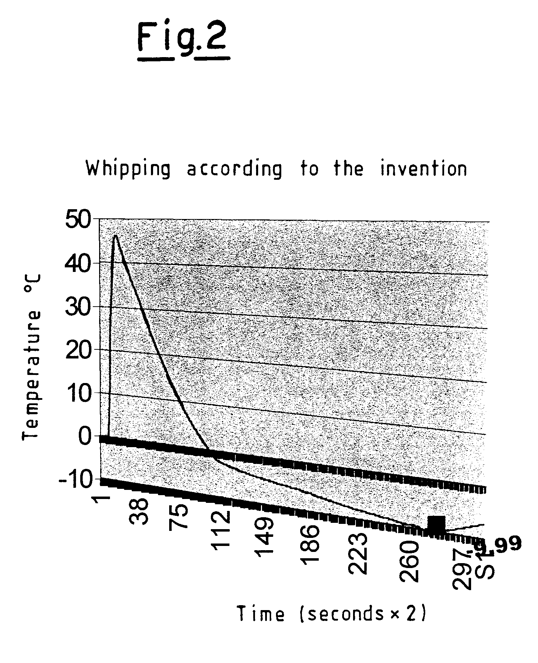

The graph illustrated in Figure 2 of the drawings, offered for exemplifying and non-limiting purposes, illustrates the temperature and the time periods (expressed in seconds x 2), referred to an exemplifying quantity of a type of blend in the various phases of an example of embodiment of the process according to the invention.

The tests utilized a machine known in the market as "Executive Triptych 183" ("TRITTICO 183 EXECUTIVE").

The basic blend used consisted of: 2.5 liters of a blend with a 39% fat content, 975 grams of CREMIZIA ("registered trademark of the company Nuova Tradizione S.r.l.") in 1,525 grams of water.

An examination of the graph of Figure 2 allowed verifying the run of the temperatures during the whipping process according to the invention.

As can be clearly seen from the graph of Figure 2, the sample no. 274 (corresponding to a whipping time of 9 minutes) attains a temperature of -10°C.

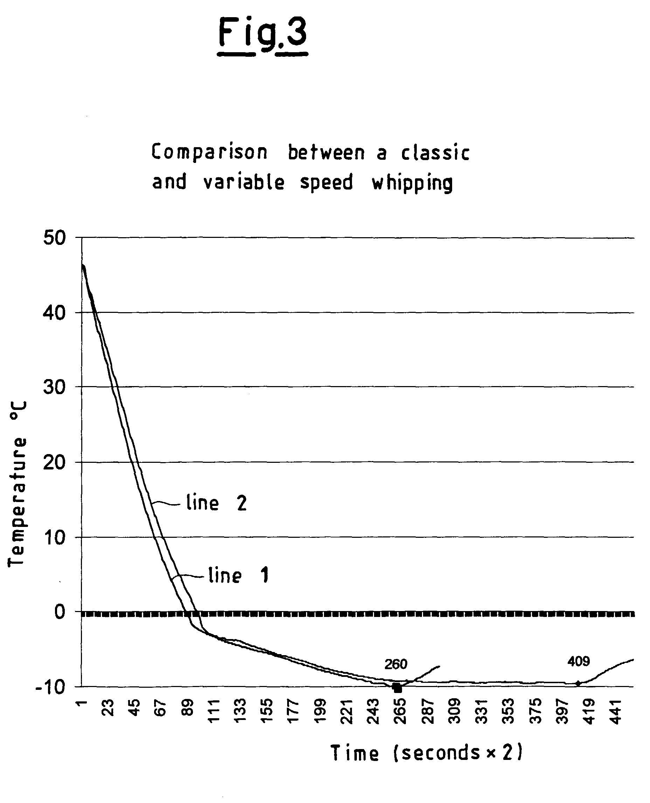

The graph of Figure 3 compares the "TRITTICO" traditional method (utilizing a constant blender rotating speed) with the process according to the invention.

To ensure a parity of judgement, the tests were run on the same machine and with the same blend mentioned above.

In the first test the blend was processed at a constant speed according to the traditional TRITTICO method, while in the second test the whipping of the blend was run by varying the blender's rotating speed.

A temperature target of -10°C was set purely for the purposes of attaining a temperature of -10°C.

While operating in accordance with the invention (Line 2) at various blender rotating speeds, a temperature of - 10°C was attained after 8 minutes and 40 seconds (260 samples x 2 = 520 seconds), whereas while operating under the traditional (constant speed) "TRITTICO" system, after a time of 13 minutes and 20 seconds the temperature of the whipped product had reached only -9.62°C.

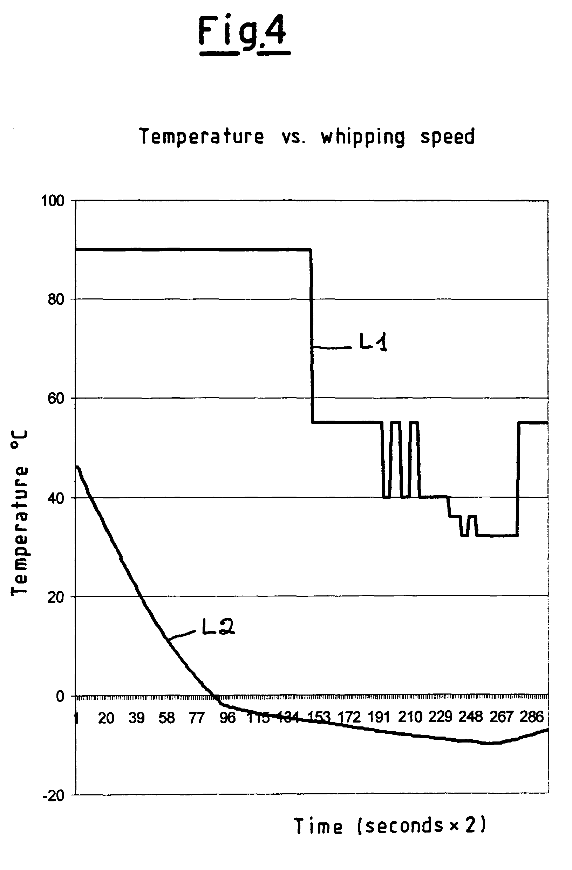

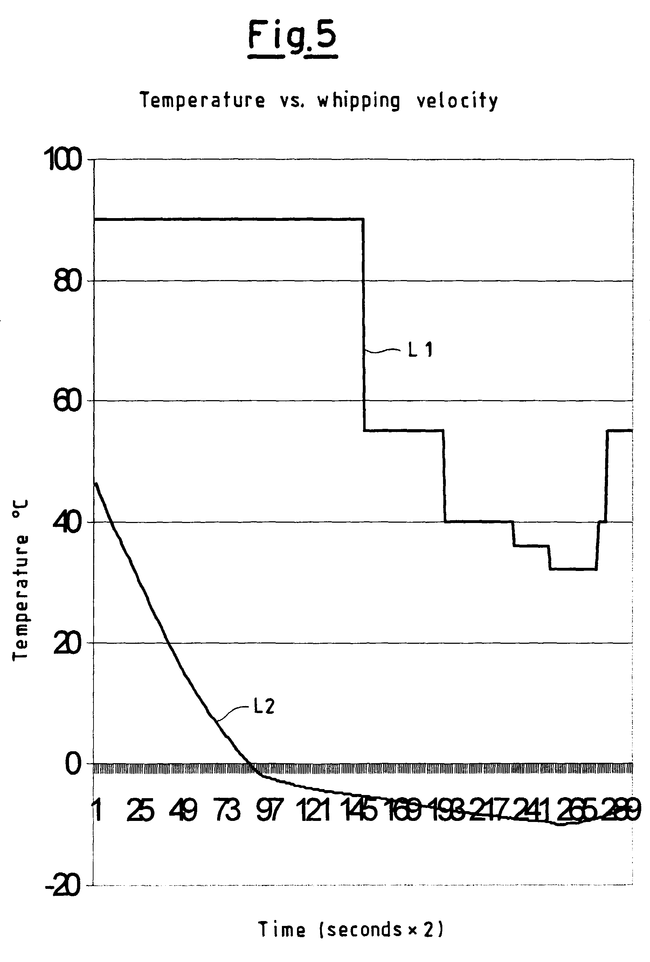

The graphs of the Figures 4, 5 describe the whipping speeds in relation to two different examples of practical embodiment of the process according to the invention, where L1 indicates the whipping speed, and L2 the temperatures and cycling times of the whipping process.

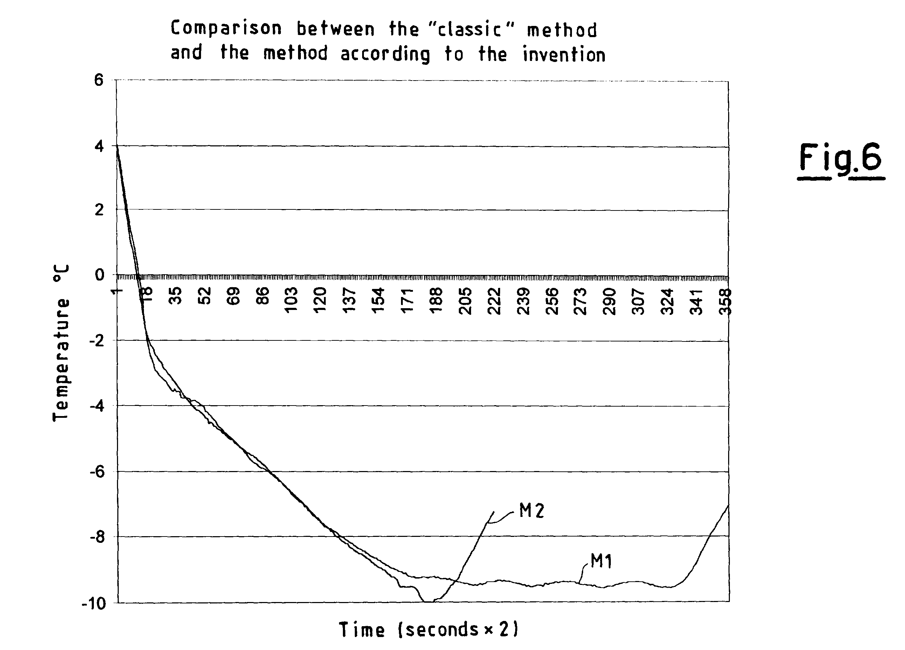

The graph of Figure 6 offers a comparison between the "traditional" or "classic" whipping cycle, where the blend is introduced into the blender after curing at a temperature around + 4°C, carried out at constant speed, and the process according to the invention carried out at variable speed. M1 is the classic method, M2 the method according to the invention.

In order to implement the process, the ingredients are added to the machine as usual, meaning by premixing the powders with each other and adding them to the liquid, for example to the milk, which has been previously brought up to a temperature of about 30°C. In the "TRITTICO" system, such a blend is heated up to 85°C and after reaching this temperature fed directly to the blender, so as to be directly subjected to the whipping process.

The tables given below outline the temperature data, the time periods, rotating speeds and overruns (air incorporations) in various tests run.

The tables 1, 2 and 3 refer to the process of the invention, while the Table 4 refers to the "TRITTICO" method.

| 1) | Hert z | Speed, rpm | Temperature, °C | Time, min. | Overrun,% |
|---|---|---|---|---|---|
| | 80 | 320 | -4 | 5 | |
| | 50 | 200 | -8 | 8 | |
| | 40 | 164 | - 10 | 8.5 | 28 |
| 2) | 90 | 350 | -5 | 5 | |
| | 60 | 240 | - 7 | 6 | |
| | 40 | 164 | - 10 | 7.5 | 33 |
| 3) | 80 | 320 | -4.5 | 5 | |
| | 60 | 240 | - 8 | 7.5 | |
| | 40 | 164 | - 10 | 8.5 | 30 |
| 4) | 50 | 200 | - 3.5 | 5 | 25 |
| | 50 | 200 | -10 | 9 | |

Based on the tests run above, it is obvious that as the initial speed increases, the whipping time (at -10°C) decreases, the overrun (incorporation of air into the blend) increases, and the thermal stability of the product improves, or in other words that the measured dripping point under the traditional method is 13 minutes, while that under the method according to the invention (Test no. 2) is 15 minutes.

The scope of protection of the invention is defined by the following claims.

## Claims

1. A process for the whipping of blended foodstuffs, in which a blend in a fluid state is introduced into a whipping unit equipped with devices to cool the blend, and a blender operating to bring it to the pasty or creamy condition of a finished product, characterized in that said blend is processed, during the transition from said fluid to pasty conditions, in accordance with a sequence of phases, during each of which said blender rotates at a different speed.

2. A process according to claim 1, characterized in that the blender's rotating speeds are decreasing from a higher initial speed at the time of introducing the blend into the whipping unit, to a lower final speed at the end of the whipping cycle.

3. A process according to claim 2, characterized in that short peaks of speed increases are provided between one decreasing speed and the other.

4. A process according to claim 1, characterized in that at the end of the whipping cycle the blender's rotating speed is accelerated to favor the extraction of the finished product.

5. A process according to claim 1, characterized in that it comprises four phases in which the blender's rotating speed is 90 Hz (350 rpm), 55 Hz (210 rpm), 40 Hz (164 rpm) and 32 Hz (140 rpm), respectively.

6. A process according to claim 1, characterized in that it comprises three phases in which the blender's rotating speed is 80 Hz (320 rpm), 50 Hz (200 rpm) and 40 Hz (164 rpm), respectively.

7. A process according to claim 1, characterized in that it comprises three phases in which the blender's rotating speed is 90 Hz (350 rpm), 60 Hz (240 rpm) and 40 Hz (164 rpm), respectively.

8. A process according to claim 1, characterized in that it comprises three phases in which the blender's rotating speed is 80 Hz (320 rpm), 60 Hz (240 rpm) and 40 Hz (164 rpm), respectively.

9. A whipping unit for executing the process according to the foregoing claims, equipped with a blender fitted with a multiple speed motor.

10. A whipping unit according to claim 9, characterized in that said motor is an alternate current motor equipped with a frequency "inverter".

11. A whipping unit according to claim 10, characterized in that the entire whipping cycle is executed by controlling the current absorbed by the blender motor, while adjusting the rotating speed of the blender based on the same.
